# EUROPEAN PATENT SPECIFICATION

(11) **EP 3 600 678 B1**
(45) Date of publication and mention of the grant of the patent: **05.05.2021**
(21) Application number: 18719052.5
(22) Date of filing: 20.03.2018
(51) Int. Cl.: B03D 1/008, B03D 1/01, B03D 1/02, C22B 15/00

(54) **PROCESS TO TREAT METAL OR MINERAL ORES AND COLLECTOR COMPOSITION THEREFOR**
VERFAHREN ZUR BEHANDLUNG VON METALL ODER MINERALERZEN UND SAMMLERZUSAMMENSETZUNG DAFÜR
PROCÉDÉ DE TRAITEMENT DE MINERAIS MÉTALLIQUES OU MINÉRAUX ET COMPOSITION COLLECTRICE ASSOCIÉE

(30) Priority: 23.03.2017 EP 17162623
(43) Date of publication of application: 05.02.2020
(73) Proprietor: Nouryon Chemicals International B.V., 6824 BM Arnhem (NL)
(72) Inventor: LEWIS, Andrew Clist, 471 93 Kållekärr (SE); SIIRAK, Johan, 113 43 Stockholm (SE); CASSEL, Anders Öijar, 471 60 Myggenäs (SE); SMOLKO-SCHVARZMAYR, Natalija, 471 72 Hjälteby (SE); SLIKTA, Alberto, Chicago - Illinois 60660 (US)
(74) Representative: LKGlobal UK Ltd.
(86) International application number: PCT/EP2018/056932
(87) International publication number: WO 2018/172307

(56) References cited:
- WO-A1-87/03222
- WO-A1-2017/042514
- US-A- 4 532 031

## Description

The present invention relates to a process to treat metal or mineral ores, such as copper-containing or sulfide ores, and to collector compositions that are suitably used in such processes.

Froth flotation is a physico-chemical process used to separate mineral particles considered economically valuable from those considered waste. It is based on the ability of air bubbles to selectively attach to those particles that were previously rendered hydrophobic. The particle-bubble combinations then rise to the froth phase from where the flotation cell is discharged, whilst the hydrophilic particles remain in the flotation cell. Particle hydrophobicity is, in turn, induced by special chemicals called collectors. In direct flotation systems, it is the economically valuable minerals which are rendered hydrophobic by the action of the collector. Similarly, in reverse flotation systems, the collector renders hydrophobicity to those mineral particles considered waste. The efficiency of the separation process is quantified in terms of recovery and grade. Recovery refers to the percentage of valuable product contained in the ore that is removed into the concentrate stream after flotation. Grade refers to the percentage of the economically valuable product in the concentrate after flotation. A higher value of recovery or grade indicates a more efficient flotation system.

In a froth flotation process besides collectors, also frothers can be used. Frothers have 3 main functions, namely they aid formation and preservation of small bubbles, they reduce bubble rise velocity and they aid formation of froth. In this sense they have a completely different role from collectors, which generally need to impart lipophilicity to minerals in order to float them. Surfactants achieve this by adsorbing onto mineral surfaces rendering them water repellent, reducing the stability of the hydrated layer separating the mineral from the air bubble to such a level that attachment of the particle to the bubble can be made. For this reason, frothers are characterized by needing to have a much lower log P value than collector components, or to say it in other words, frothers are generally much more hydrophilic than collectors.

Metal ores, most prominently copper ores with associated gold, silver and platinum group metals (PGM) are routinely floated with xanthate, dithiophosphate, thionocarbamate, thiocarbamate, mercaptobenzylthiazole, monothiophosphate and dithiophosphinates. Xanthate has dominated the mineral industry for much of the twentieth century, but as the need to process difficult ores has become more urgent in recent times, better collectors such as dithiophosphate have been developed. For example, when performing a flotation process for copper sulfide ores that contain a high amount of pyrite, a mix of propyl ethyl thiocarbonate and propyl methyl dithiophosphate is an example of a collector that can be used.

The copper processing industry uses a large quantity of gangue depressants like lime for depressing pyrite (FeS₂), sulfur dioxide and sulfites for depressing galena (PbS), cyanide salts for depressing sphalerite (ZnS) and pyrite, sodium hydrosulfite and sodium sulfides for depressing copper to float molybdenite (MoS₂).

It is not uncommon for process plants to add 1,000 g/t of lime as a depressant during a process to treat copper ores. It is well known that lime removes copper ions from the solution, which can activate the surface of pyrite and other unwanted minerals. Lime also has been shown to make the surface of pyrite and other minerals more hydrophilic, therefore reducing the tendency to float.

US 2,166,093 discloses that nitrile collectors are effective in floating copper ores but discloses the use of a compound having a single nitrile-functional group with a hydrophobic aliphatic component of 10 or less carbons. US 2,175,093 discloses the use of aliphatic dinitriles (of a general structure of CN-R-CN, wherein R is an alkylene group) as froth flotation agents in copper ore flotation.

US 4,532,031 discloses a froth flotation process to treat a copper ore. The process involves using a frother compound of the formula R-W-Cn(XY)-Z wherein R is an alkyl group with up to 12 carbon atoms, W may be int. al. an oxygen, imino or substituted imino and Z may be int. al. a nitrile group. In the Examples the frother can be for example isobutyl cyanoethylamine or isobutyl cyanoethyl ether, i.e. compounds wherein the alkyl chain is isobutyl (an alkyl group with 4 carbon atoms). These frother compounds used in the examples have a log P value of below 1, i.e in the working embodiments very hydrophilic compounds are used, which makes them suitable for use as a frother.

WO 87/032222 discloses collector compositions for the froth flotation of mineral values. The collectors are said to be chosen from a large group of compounds including (as group Q) besides all sorts of amines, imines and amides, also nitriles, wherein the compounds can contain alkyl chains as small as C1 alkyl (as group R1), and the compounds can contain several types of heteroatom-based functional groups (as group X). The preferred collector components in this WO '222 document are said to be the amides and amines (as group Q) and in further preferred embodiments they are amines and amides with a sulfur atom in their structure (as group X). In the Examples copper ores are flotated but also here no nitrile-functional collector components are used but instead use is made of thiol functional amines and amides.

WO 2007/059559 discloses a process to treat copper ores using a collector composition containing a nitrile compound. The nitrile compounds tested in the document are hexyl dinitrile and several alkyl mononitriles containing an alkyl chain of at least 4 carbon atoms. It was shown that 11 or more carbons in the hydrophobic component attached to a nitrile were more efficient in floating copper sulfide, Au, Ag and platinum group elements (PGE). Examples given for the hydrophobic component are derived from coconut and tallow fatty acids.

There is a continued need to find better collectors for metal or mineral ores, such as copper or sulfide ores, which is driven by the necessity to process ores of lower grade and ores containing gangue minerals which are difficult to separate from the metal (copper) or mineral and are detrimental to the refining processes and quality of the finished product.

The present invention provides an improved process to treat metal or mineral ores, such as copper or sulfide ores, and collector compositions for use therein which provide an improved grade and recovery. The present invention additionally provides an improvement in that there is a reduced need for the addition of a depressant such as lime depressant.

The invention provides a process to treat metal or mineral ores with a collector composition that comprises a nitrile group-containing compound of the formula (I) 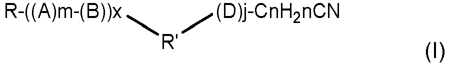 wherein R is a saturated or unsaturated, linear or branched, hydrocarbon group containing 8 to 26 carbon atoms, R'= O or 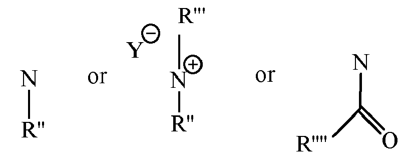
R" is a saturated or unsaturated, linear or branched, hydrocarbon group containing 1 to 26 carbon atoms or a hydrogen atom or (-(D)ⱼ-CₙH₂ₙCN) group or R-((A)ₘ-(B))ₓ group,
A is (-O-CH₂CH₂-); (-O-CH(CH₃)CH₂-) or (-O-CH(CH₂CH₃)CH₂-)
B is (-O-CₚH₂ₚ-)
D is (-CH₂CH₂-O-); (-CH(CH₃)CH₂-O-) or (-CH(CH₂CH₃)CH₂-O-)
x is 0 or 1
R'" is a hydrocarbon group containing 1 to 4 carbon atoms
Y is halide or methylsulfate
m, j are each independently an integer of 0-5
R"" is a saturated or unsaturated, linear or branched, hydrocarbon group containing 1 to 26 carbon atoms
n and p are each independently an integer of 1 to 5.

The invention furthermore provides collector compositions containing as component (a) 1 wt% to 99 wt% of a nitrile group-containing compound of the formula (I) 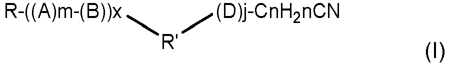 wherein R is a saturated or unsaturated, linear or branched, hydrocarbon group containing 8 to 26 carbon atoms, R'= O or 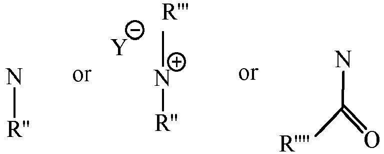
R" is a saturated or unsaturated, linear or branched, hydrocarbon group containing 1 to 26 carbon atoms or a hydrogen atom or (-(D)ⱼ-CₙH₂ₙCN) group or R-((A)ₘ-(B))ₓ group,
A is (-O-CH₂CH₂-); (-O-CH(CH₃)CH₂-) or (-O-CH(CH₂CH₃)CH₂-)
B is (-O-CₚH₂ₚ-)
D is (-CH₂CH₂-O-); (-CH(CH₃)CH₂-O-) or (-CH(CH₂CH₃)CH₂-O-) x is 0 or 1
R'" is a hydrocarbon group containing 1 to 4 carbon atoms
Y is halide or methylsulfate
m and j are each independently an integer of 0-5
R"" is a saturated or unsaturated, linear or branched, hydrocarbon group containing 1 to 26 carbon atoms and n and p are each independently an integer of 1 to 5, and
as component (b) 1 to 99 wt% of at least one of a collector selected from the group of nitrile, xanthate, dithiophosphate, thionocarbamate, thiocarbamate, mercaptobenzylthiazole, monothiophosphate and dithiophosphinates and hydroximate collectors, or a frother selected from the group of phenols, alkyl sulfates, aliphatic alcohols, generally C5 - C8 cyclic alcohols, alkoxyalkanes, polypropylene glycol ethers, polyglycol ethers, polyglycol glycerol ethers, pyridine base, natural oils such as terpineol (as in pine oil) and cresols, mixed ethers, aldehydes and ketone co-products of oxo alcohol production, ethoxylated alcohols.

In preferred embodiments the nitrile group-containing compound has a log P value of higher than 3, preferably higher than 4. The log P value is preferably lower than 10.

Log P stands for partition-coefficient (P) and reflects the ratio of concentrations of a compound in a mixture of two immiscible phases at equilibrium. This ratio is therefore a measure of the difference in solubility of the compound in these two phases. One of the solvents is the hydrophilic solvent water while the second solvent is the hydrophobic 1-octanol. Hence the partition coefficient measures how hydrophilic ("water-loving") or hydrophobic ("water-fearing") a chemical substance is. Log P values for the purpose of this specification are calculated using the online ALOGPS 2.1 software available via the website http://www.vcclab.org/lab/alogps/ as existent in February 2018. The document R Mannhold, G Poda, C Ostermann, I Tetko, "Calculation of Molecular Lipophilicity: State of the Art and Comparison of Log P Methods on More Than 96000 Compounds", Journal of Pharmaceutical Sciences 2009, 98(3), 861-893 provides further information on log P.

Preferably, in the nitrile group-containing compound R' = O or N-R", and the sum of m, j plus x is 0-10.

Even more preferably, in the nitrile group-containing compound R' = O or N-R", and the sum of m, j and x is 0-5. Yet more preferably m and j are independently each 0, 1 or 2. Most preferably x is 0.

A in a preferred embodiment is (-O-CH₂CH₂-) or (-O-CH(CH₃)CH₂-), and most preferably it is (-O-CH₂CH₂-). In another preferred embodiment p is 3. D is preferably (-CH₂CH₂-O-) or (-CH(CH₃)CH₂-O-) and most preferably (-CH₂CH₂-O-).

Even more preferably, the nitrile group-containing compound is of the formula R(R")_{y}-N-(CₙH₂ₙCN)_{z}, wherein R as defined above is a saturated or unsaturated, linear or branched, hydrocarbon group containing 8 to 26 carbon atoms, R" as defined above is a saturated or unsaturated, linear or branched, hydrocarbon group containing 1 to 26 carbon atoms or a hydrogen atom, z is 1, 2 or 3, y is 0 or 1, the sum of z+y = 2 or 3 and n as defined above is an integer between 1 and 5.

If in the above the sum z+y is 2, the compound is an amine compound; if the sum z+y is 3, the compound is an ammonium compound.

The process of the invention can be a direct or a reverse flotation process. For example, in an ore containing copper sulfide and zinc sulfide the zinc is depressed and the copper is floated off the zinc sulfide. The process in an embodiment is a reverse flotation of zinc sulfide. When copper ore is floated, the process in an embodiment is a direct flotation.

Preferably, R and R" are each independently an alkyl group or an alkenyl group with 0 to 3 unsaturated bonds, even more preferably R or R" are each independently a linear alkyl or alkenyl group, yet even more preferably a C10-C20 alkyl or alkenyl group, or even more preferably a C13-C20 group; most preferably R and R" each independently are a fatty alkyl chain such as one that can be derived from coco, tallow, palm oil, palm kernel oil, soya oil, rape seed oil, cotton seed oil, corn oil.

In another preferred embodiment z is 1 or 2, even more preferred z is 2.

In yet another preferred embodiment the value of n is 2 or 3.

If component (b) in the collector compositions according to the invention is a nitrile collector, it should be understood that it is a nitrile compound different from the nitrile-containing compound as component (a). Preferably, component (b) is a xanthate, dithiophosphate, thionocarbamate collector.

The metal or mineral ore in some embodiments may be a metallic sulfide ore containing copper, gold, platinum, silver, nickel, molybdenum, asenic sulfides, cobalt, zinc, lead, tin, antimony, preferably, copper, zinc, lead, gold, platinum, or silver.

The process of the invention may involve other additives and auxiliary materials which are typically present in a froth flotation process, they can be added at the same time or, preferably, separately during the process. Further additives that may be present in the flotation process are further collectors (such as thiol-based collectors, like xanthate, dithiophosphate, thionocarbamate, thiocarbamate, mercaptobenzylthiazole, monothiophosphate and dithiophosphinates and hydroximate or other nitrile collectors), depressants (such as lime, starch, chromate, cynide, sodium sulfide, zinc sulfate, sulfur dioxide, sodium hydrosulfide, polysulfides, copper sulfate, sodium hyrosulfide, polyphosphates, chromates, starch, cellulose-based reagents), dispersants (such as sodium silicate and polyacrylic acid (PAA)) and activators (such as copper sulfate, sodium sulfide, sodium hydrosulfide), frothers/froth regulators/froth modifiers/defoamers (such as aliphatic alcohols such as MIBC, Flottec FX120-01 and ethyl hexanol, polypropylene glycols and their ethers such as Dowfroth 200, Dowfroth 250, Dowfroth 1012, Flottec FX160-01, FX160-05, F160, F150; polyethylene glycols and their ethers such as FlottecFX120-02, Nassaco MasFroth240 and Sasol NovelFrother 234), and pH-regulators (such as sodium hydroxide, lime or sodium carbonate). In preferred embodiments, lime is used in an amount of about 10 to about 1,000 g/t of ore as a pH modifier and a depressant of iron pyrites.

In another aspect, the present invention relates to a pulp comprising crushed and ground ore, a collector composition as defined herein, and optionally further flotation aids. This pulp can be prepared by first griding the ore and then adding collector composition or by adding at least part of the collector composition to the ore and milling the ore to pulp in the presence of at least part of the collector composition.

The metallic sulfide ores that can be used in the process of the invention may include stibnite, arsenopyrite, bismuthinite, greenockite, cobaltite, carrolite, linnaeite, chalcopyrite, chalcocite, bornite, cocellite, tennantite, tetrahedrite, enargite, argyrodite, pyrrhotite, pyrite, galena, jamesonite, cinnabar, molybdenite, penlandite, millerite, heazelwoodite, argentite, acanthite, patronite, sphalerite, wurtzite and marmatite-containing ores.

The amount of collector used in the process of reversed flotation of the present invention will depend on the amount of impurities present in the ore and on the desired separation effect, but in some embodiments will be in the range of from 1-500 g/ton dry ore, preferably in the range of from 5-100 g/ton dry ore, more preferably 5-30 g/ton dry ore.

### Examples

### Example 1

### Flotation procedure

500 g of an iron pyrite-containing copper ore containing about 20 wt% of pyrite was milled without lime or any gangue suppressant. The milling time was adjusted to produce a product at 80% pass 45 microns (P₈₀ = 45µm).

The milled ore was placed into a 1.4L Denver flotation cell. Tap water (naturally containing 22g/L of calcium) was added to the marked level in the cell (1.4L) and the mixing started. The ore sample was left at its natural equilibrated pH during milling and flotation. The collector as indicated in Table 1 below (Thiocarbomate/dithiophosphate, Alkyl-nitrile (Coco), Alkyl-nitrile (Tallow) or N-alkyl-N-((di)cyanoethyl)amine) (Tallow) in an amount of 20g/t of ore, and frother (methyl isobutyl carbinol (MIBC)) in an amount of 20g/t of ore were added and conditioned for 3 minutes. The experiments were done with (Examples A - C) and without (Examples D to G) lime as a depressant. The rougher flotations followed by three cleaning steps were performed. All the fractions (rougher tailings, middlings and concentrate) were collected and analyzed.

**Table 1 - Treatment of iron pyrite-containing copper ore with several collectors with and without depressant**

| Example | Collector | Collector dose g/t | Frother (MIBC) dose g/t | Depressant (Lime) dose g/t | Modified pH |
|---|---|---|---|---|---|
| A (comp) | Thiocarbomate/dithiophosphate | 20 | 20 | 600 | 10.4 |
| B (comp) | Alkyl-nitrile (Coco) | 20 | 20 | 600 | 10.4 |
| C | N-alkyl-N-((di)cyanoethyl)amine (Tallow)) | 20 | 20 | 600 | 10.4 |
| D (comp) | Thiocarbomate/dithiophosphate | 20 | 20 | 0 | 7.5-7.9 |
| E (comp) | Alkyl-nitrile (Coco) | 20 | 20 | 0 | 7.5-7.9 |
| F (comp) | Alkyl-nitrile (Tallow) | 20 | 20 | 0 | 7.5-7.9 |
| G | N-alkyl-N-((di)cyanoethyl)amine (Tallow) | 20 | 20 | 0 | 7.5-7.9 |

### Results

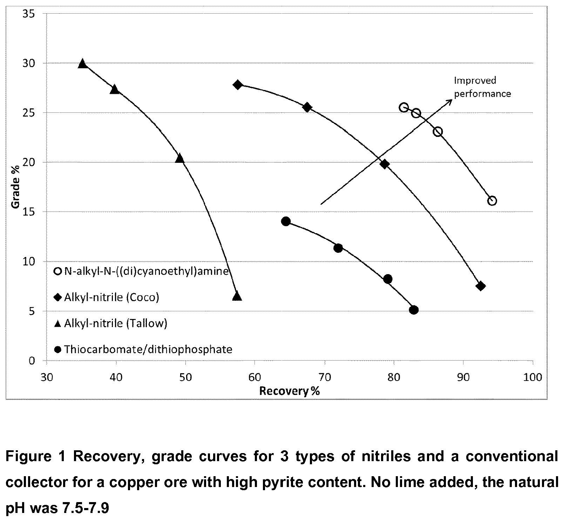

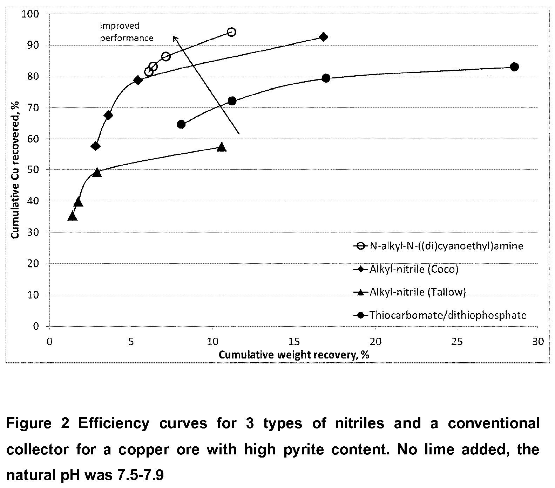

The results are shown in Table 2 and graphically represented in Figures 1 and 2

**Table 2 : % copper recovered for a copper ore, with and without lime added.**

| Example | Collector | % recovery Cu |
|---|---|---|
| A (comp) | Th ioca rbomate/d ith iophos phate | 67.7 |
| B (comp) | Alkyl-nitrile (Coco) | 65.0 |
| C | N-alkyl-N-((di)cyanoethyl)amine (Tallow) | 71.4 |
| D (comp) | Thiocarbomate/dithiophosphate | 64.5 |
| E (comp) | Alkyl-nitrile (Coco) | 57.6 |
| F (comp) | Alkyl-nitrile (Tallow) | 35.2 |
| G | N-alkyl-N-((di)cyanoethyl)amine (Tallow) | 81.4 |

N-alkyl-N-((di)cyanoethyl)amine performs better than the conventional collector for removing copper minerals with or without the addition of lime depressant. Figure 1 shows that N-alkyl-N-((di)cyanoethyl)amine has the best grade recovery curve, followed by alkyl-nitrile (coco-nitrile).

The performance of a collector can also be demonstrated by plotting the % recovery of Cu against the total % recovery of all material in the concentrate. % recovery of all material is a combination of copper and unwanted gangue. Therefore, a reduced weight recovery and at the same time an increased Cu recovery is the most desirable situation. When no lime is added, N-alkyl-N-((di)cyanoethyl)amine has clearly the best performance. When lime is added and the pH is controlled at 10.3, the N-alkyl-N-((di)cyanoethyl)amine produced the best % recovery. All samples had the same % grade in the final concentrate.

### Example 2

### Flotation procedure

500 g of an iron pyrite-containing copper ore containing about 7 wt% of pyrite was milled without lime or any gangue suppressant. The milling time was adjusted to produce a product at 80% pass 33 microns (P₈₀ = 33µm).

The milled ore was placed into a 1.4L Denver flotation cell. Tap water (naturally containing 22g/L of calcium) was added to the marked level in the cell (1.4L) and the mixing started. The ore sample was left at its natural equilibrated pH during milling and flotation. The collector (N-alkyl-N-((di)cyanoethyl)amine (tallow), 3-(2methylpropoxy)propanenitrile ("isobutyl cyano ethylether"), 3-((2methylpropyl)amine)propanenitrile ("isobutyl cyano ethylamine"), 2-(hexylthio)ethanamine + 2-(methylsulfanyl)hexane (50:50 weight ratio), N-alkyl-N-((di)cyanoethyl)amine (tallow) + 2-(methylsulfanyl)hexane (50:50 weight ratio) in an amount of 20g/t of ore, and no frother or frother (methyl isobutyl carbinol (MIBC)) in an amount of 20g/t of ore were added and conditioned for 1 minute.

The collector components have a log P value as follows:

| | |
|---|---|
| (N-alkyl-N-((di)cyanoethyl)amine (tallow) | 6.4 |
| 3-(2methylpropoxy)propanenitrile | 0.99 |
| 3-((2methylpropyl)amine)propanenitrile | 0.46 |
| 2-(hexylthio)ethanamine | 2.96 |
| 2-(methylsulfanyl)hexane | 3.75 |

The rougher flotations followed by two cleaning steps were performed. All the fractions (rougher tailings, middlings and concentrate) were collected and analyzed.

### Results

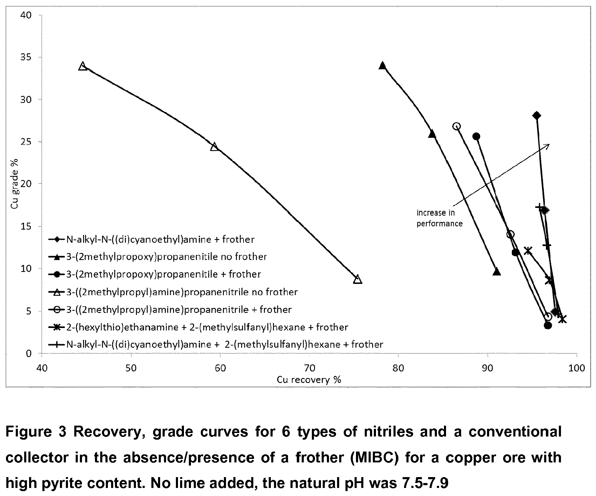

The results are shown in Table 3 and graphically represented in Figure 3.

**Table 3 % copper recovered for a copper ore, the used frother is MIBC**

| Example | Collector(s) | % recovery Cu (final concentrate) | % grade Cu (final concentrate) |
|---|---|---|---|
| A | N-alkyl-N-((di)cyanoethyl)amine (tallow) | 96 | 28 |
| B (comp) | 3-(2methylpropoxy)propanenitile no frother | 78 | 34 |
| C (comp) | 3-(2methylpropoxy)propanenitile + frother | 89 | 26 |
| D (comp) | 3-((2methylpropyl)amine)propanenitrile + frother | 87 | 27 |
| E (comp) | 3-((2methylpropyl)amine)propanenitrile no frother | 45 | 34 |
| F (comp) | 2-(hexylthio)ethanamine + 2-(methylsulfanyl)hexane | 95 | 12 |
| G | N-alkyl-N-((di)cyanoethyl)amine (tallow) + 2-(methylsulfanyl)hexane | 96 | 17 |

Collector compositions containing a compound according to the invention perform better than conventional collectors for removing copper minerals, as can be seen in Examples A and G where not only the % recovery is high but also the % grade Cu. The collector compositions according to the present invention perform better than using a compound that is not sufficiently lipophilic such as in comparative Examples B to E, but they also outperform state of the art nitrile compounds that are reasonably lipophilic such as those in comparative Example F. Example A delivers the best results as most of the nitrile compound according to the invention is used

## Claims

1. Process to treat metal or mineral ores with a collector composition that comprises a nitrile group-containing compound of the formula (I) 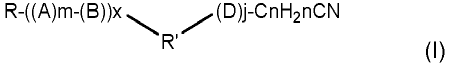 wherein R is a saturated or unsaturated, linear or branched, hydrocarbon group containing 8 to 26 carbon atoms, R'= O or 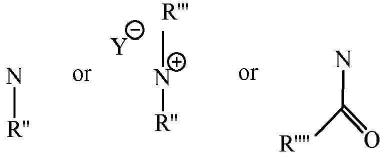
R" is a saturated or unsaturated, linear or branched, hydrocarbon group containing 1 to 26 carbon atoms or a hydrogen atom or (-(D)ⱼ-CₙH₂ₙCN) group or R-((A)ₘ-(B))ₓ group,
A is (-O-CH₂CH₂-); (-O-CH(CH₃)CH₂-) or (-O-CH(CH₂CH₃)CH₂-) B is (-O-CₚH₂ₚ-)
D is (-CH₂CH₂-O-); (-CH(CH₃)CH₂-O-) or (-CH(CH₂CH₃)CH₂-O-) x is 0 or 1
R'" is a hydrocarbon group containing 1 to 4 carbon atoms Y is halide or methylsulfate
m and j are each independently an integer of 0-5
R"" is a saturated or unsaturated, linear or branched, hydrocarbon group containing 1 to 26 carbon atoms
n and p are each independently an integer of 1 to 5.

2. Process of claim 1 wherein R' = O or N-R", and the sum of m, j and x is 0-10.

3. Process of claim 1 or 2 wherein the sum of m, j and x is 0-5.

4. Process of any one of claims 1 to 3 wherein the nitrile-containing compound is of the formula R(R")_{y}-N-(CₙH₂ₙCN)_{z}, wherein R is a saturated or unsaturated, linear or branched, hydrocarbon group containing 8 to 26 carbon atoms, R" is a saturated or unsaturated, linear or branched, hydrocarbon group containing 1 to 26 carbon atoms or a hydrogen atom, z is 1 or 2, y is 0 or 1, the sum of z+y = 2 or 3 and n is an integer of 1 to 5.

5. Process of any one of claims 1 to 4 wherein R and R" each independently are an alkyl group or alkenyl group with 1 to 3 unsaturated bonds.

6. Process of any one of claims 1 to 5 wherein R and R" each independently are a linear alkyl or alkenyl group, preferably containing 10 to 20 carbon atoms.

7. Process of any one of claims 1 to 6 wherein the metal or mineral ore is a metallic sulfide ore containing copper, gold, platinum, silver, nickel, molybdenum, arsenic sulfides, cobalt, zinc, lead, tin, antimony, copper, gold, platinum, or silver.

8. Process of any one of claims 1 to 7 wherein the collector composition in addition contains at least one of a collector selected from the group of nitrile, xanthate, dithiophosphate, thionocarbamate, thiocarbamate, mercaptobenzylthiazole, monothiophosphate and dithiophosphinates and hydroximate collectors, or a frother selected from the group of phenols, alkyl sulfates, aliphatic alcohols, such as C5 - C8 cyclic alcohols, alkoxyalkanes, polypropylene glycol ethers, polyglycol ethers, polyglycol glycerol ethers, pyridine base, natural oils, such as terpineol and cresols, mixed ethers, aldehydes and ketone co-products of oxo alcohol production, ethoxylated alcohols.

9. Process of any one of claims 1 to 8 comprising the steps of
a) conditioning a pulped metallic or mineral ore, in an aqueous solution optionally, concentrating the medium with magnetic separation;
- optionally, adding frothers;
- optionally, conditioning the mixture with a flotation depressant or flotation activator;
- optionally, adjusting the pH
b) adding the collector composition as described in any one of the claims 1 to 8
c) optionally, adding other flotation aids to the pulp, and
d) performing a froth flotation process by introducing air into the conditioned water-ore mixture, and skimming off the froth formed to recover the mineral and/or metals.

10. Collector composition containing as component (a) 1 wt% to 99 wt% of a nitrile group-containing compound of the formula (I) 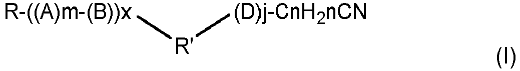
wherein R is a saturated or unsaturated, linear or branched, hydrocarbon group containing 8 to 26 carbon atoms,
R'= O or 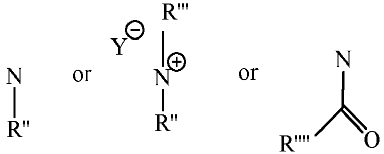
R" is a saturated or unsaturated, linear or branched, hydrocarbon group containing 1 to 26 carbon atoms or a hydrogen atom or (-(D)ⱼ₋CₙH₂ₙCN) group or R-((A)ₘ-(B))ₓ group, A is (-O-CH₂CH₂-); (-O-CH(CH₃)CH₂-) or (-O-CH(CH₂CH₃)CH₂-) B is (-O-CₚH₂ₚ-)
D is (-CH₂CH₂-O-); (-CH(CH₃)CH₂-O-) or (-CH(CH₂CH₃)CH₂-O-) x is 0 or 1
R'" is a hydrocarbon group containing 1 to 4 carbon atoms
Y is halide or methylsulfate
m and j are each independently an integer of 0-5
R"" is a saturated or unsaturated, linear or branched, hydrocarbon group containing 1 to 26 carbon atoms
n and p are each independently an integer of 1 to 5; and
as component (b) 1 to 99 wt% of at least one of a collector selected from the group of nitrile, xanthate, dithiophosphate, thionocarbamate, thiocarbamate, mercaptobenzylthiazole, monothiophosphate and dithiophosphinates and hydroximate collectors, or a frother selected from the group of phenols, alkyl sulfates, aliphatic alcohols, such as C5 - C8, cyclic alcohols, alkoxyalkanes, polypropylene glycol ethers, polyglycol ethers, polyglycol glycerol ethers, pyridine base, natural oils such as terpineol and cresols, mixed ethers, aldehydes and ketone co-products of oxo alcohol production, ethoxylated alcohols.

11. Collector composition of claim 10 containing 20 to 80 wt% of component (a) and 20 to 80 wt% of component (b).

12. Collector composition of claim 10 or 11 wherein R' = O or N-R", and the sum of m, j and x is 0-5.

13. Collector composition of any one of claims 10 to 12 wherein the nitrile-containing compound is of the formula R(R")_{y}-N-(CₙH₂ₙCN)_{z}, wherein R is a saturated or unsaturated, linear or branched, hydrocarbon group containing 8 to 26 carbon atoms, R" is a saturated or unsaturated, linear or branched, hydrocarbon group containing 1 to 26 carbon atoms or a hydrogen atom, z is 1 or 2, y is 0 or 1, the sum of z+y = 2 or 3 and n is an integer between 1 and 5.

14. A pulp comprising the crushed and ground copper or sulfidic ore and a collector composition comprising a nitrile group-containing compound of the formula (I) 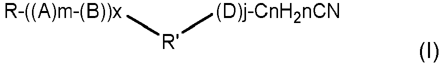 wherein R is a saturated or unsaturated, linear or branched, hydrocarbon group containing 8 to 26 carbon atoms, R'= O or 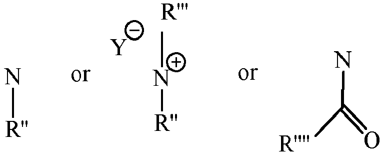
R" is a saturated or unsaturated, linear or branched, hydrocarbon group containing 1 to 26 carbon atoms or a hydrogen atom or (-(D)ⱼ-CₙH₂ₙCN) group or R-((A)ₘ-(B))ₓ group,
A is (-O-CH₂CH₂-); (-O-CH(CH₃)CH₂-) or (-O-CH(CH₂CH₃)CH₂-) B is (-O-CₚH₂ₚ-)
D is (-CH₂CH₂-O-); (-CH(CH₃)CH₂-O-) or (-CH(CH₂CH₃)CH₂-O-) x is 0 or 1
R'" is a hydrocarbon group containing 1 to 4 carbon atoms
Y is halide or methylsulfate
m, j are each independently an integer of 0-5
R"" is a saturated or unsaturated, linear or branched, hydrocarbon group containing 1 to 26 carbon atoms
n and p are each independently an integer of 1 to 5.

## Patentansprüche

1. Verfahren zur Behandlung von Metall- oder Mineralerzen mit einer Sammlerzusammensetzung, die eine nitrilgruppehaltige Verbindung der Formel (I) umfasst 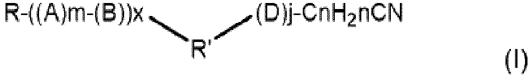 wobei R eine gesättigte oder ungesättigte, lineare oder verzweigte Kohlenwasserstoffgruppe ist, die 8 bis 26 Kohlenstoffatome enthält R' = O oder 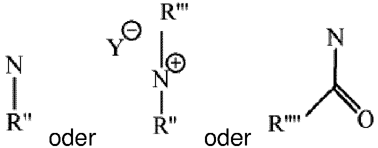
R" eine gesättigte oder ungesättigte, lineare oder verzweigte Kohlenwasserstoffgruppe, die 1 bis 26 Kohlenstoffatome enthält, oder ein Wasserstoffatom oder eine (-(D)ⱼ-CₙH₂ₙCN)-Gruppe oder R-((A)ₘ-B))ₓ-Gruppe ist,
A (-O-CH₂CH₂-); (-O-CH(CH₃)CH₂-) oder (-O-CH(CH₂CH₃)CH₂-) ist;
B (-O-C_{P}H_{2P}-) ist
D (-CH₂CH₂-O);(-CH(CH₃)CH₂-O) oder (-CH(CH₂CH₃)CH₂-O-) ist x 0 oder 1 beträgt
R'" eine Kohlenwasserstoffgruppe ist, die 1 bis 4 Kohlenstoffatome enthält, Y Halogenid oder Methylsulfat ist
m und j jedes unabhängig eine ganze Zahl von 0-5 ist R"" eine gesättigte oder ungesättigte, lineare oder verzweigte Kohlenwasserstoffgruppe ist, die 1 bis 26 Kohlenstoffatome enthält n und p jedes unabhängig eine ganze Zahl von 1 bis 5 ist.

2. Verfahren nach Anspruch 1, wobei R' = O oder N-R" und die Summe von m, j und x 0-10 beträgt.

3. Verfahren nach Anspruch 1 oder 2, wobei die Summe von m, j und x 0-5 beträgt.

4. Verfahren nach einem der Ansprüche 1 bis 3, wobei die nitrilhaltige Verbindung die Formel R(R")_{y}-N-(CₙH₂ₙCN)_{z} aufweist, wobei R eine gesättigte oder ungesättigte, lineare oder verzweigte, Kohlenwasserstoffgruppe ist, die 8 bis 26 Kohlenstoffatome enthält, R" eine gesättigte oder ungesättigte, lineare oder verzweigte Kohlenwasserstoffgruppe, die 1 bis 26 Kohlenstoffatome oder enthält, oder ein Wasserstoffatom ist, z 1 oder 2 beträgt, y 0 oder 1 beträgt, die Summe von z + y = 2 oder 3 ist und n eine ganze Zahl von 1 bis 5 ist.

5. Verfahren nach einem der Ansprüche 1 bis 4, wobei R und R" jedes unabhängig eine Alkylgruppe oder Alkenylgruppe mit 1 bis 3 ungesättigten Bindungen ist.

6. Verfahren nach einem der Ansprüche 1 bis 5, wobei R und R" jedes unabhängig eine lineare Alkyl- oder Alkenylgruppe ist, die bevorzugt 10 bis 20 Kohlenstoffatome enthält.

7. Verfahren nach einem der Ansprüche 1 bis 6, wobei das Metall- oder Mineralerz ein metallisches Sulfiderz ist, das Kupfer, Gold, Platin, Silber, Nickel, Molybdän, Arsensulfide, Kobalt, Zink, Blei, Zinn, Antimon, Kupfer, Gold, Platin oder Silber enthält.

8. Verfahren nach einem der Ansprüche 1 bis 7, wobei die Sammlerzusammensetzung außerdem mindestens einen von einem Sammler ausgewählt aus der Gruppe von Nitril, Xanthat, Dithiophosphat, Thioncarbamat, Thiocarbamat, Mercaptobenzylthiazol, Monothiophosphat und Dithiophosphinaten und Hydroximatsammlern oder einen Schäumer enthält ausgewählt aus der Gruppe von Phenolen, Alkylsulfaten, aliphatische Alkoholen wie cyclischen C5- C8-Alkoholen, Alkoxyalkanen, Polypropylenglycolethern, Polyglycolethern, Polyglycolglycerinethern, Pyridinbase, natürlichen Ölen wie beispielsweise Terpineol und Cresolen, gemischten Ethern, Aldehyden und Ketonnebenprodukten aus der Oxoalkoholherstellung, ethoxylierten Alkoholen.

9. Verfahren nach einem der Ansprüche 1 bis 8, umfassend die Schritte des
a) Konditionierens eines zermalmten metallischen oder Mineralerzes in einer wässrigen Lösung
wahlweise Konzentrieren des Mediums unter magnetischer Trennung;
- wahlweise Zusetzen von Schäumern;
- wahlweise Konditionieren der Mischung mit einem Flotationsdrücker oder Flotationsaktivator ;
- wahlweise Einstellen des pH-Werts
b) Zusetzen der Sammlerzusammensetzung wie in einem der Ansprüche 1 bis 8 beschrieben
c) wahlweise Zusetzen anderer Flotationshilfsmittel zu der breiigen Masse und
d) Ausführen eines Schaumflotationsverfahrens durch Einführen von Luft in die konditionierte Wasser-Erz- Mischung und Abschäumenₙ des gebildeten Schaums, um das Mineral und/oder die Metalle zu gewinnen.

10. Sammlerzusammensetzung enthaltend, als Komponente (a), 1 Gew.-% bis 99 Gew.-% einer nitrilgruppehaltigen Verbindung der Formel (I) 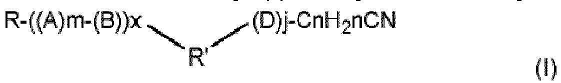 wobei R eine gesättigte oder ungesättigte, lineare oder verzweigte Kohlenwasserstoffgruppe ist, die 8 bis 26 Kohlenstoffatome enthält R' = O oder 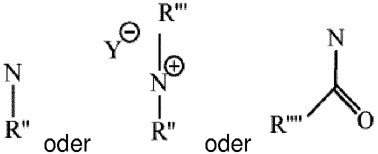
R" eine gesättigte oder ungesättigte, lineare oder verzweigte Kohlenwasserstoffgruppe, die 1 bis 26 Kohlenstoffatome enthält, oder ein Wasserstoffatom oder eine (-(D)ⱼ-CₙH₂ₙCN)-Gruppe oder R-((A)ₘ-B))ₓ-Gruppe ist,
A (-O-CH₂CH₂-); (-O-CH(CH₃)CH₂-) oder (-O-CH(CH₂CH₃)CH₂-) ist;
B (-O-C_{P}H_{2P}-) ist
D (-CH₂CH₂-O);(-CH(CH₃)CH₂-O) oder (-CH(CH₂CH₃)CH₂-O-) ist x 0 oder 1 beträgt
R'" eine Kohlenwasserstoffgruppe ist, die 1 bis 4 Kohlenstoffatome enthält, Y Halogenid oder Methylsulfat ist
m und j jedes unabhängig eine ganze Zahl von 0-5 ist R"" eine gesättigte oder ungesättigte, lineare oder verzweigte Kohlenwasserstoffgruppe ist, die 1 bis 26 Kohlenstoffatome enthält n und p jedes unabhängig eine ganze Zahl von 1 bis 5 ist; und
als Komponente (b) 1 bis 99 Gew.-% von mindestens einem von einem Sammler ausgewählt aus der Gruppe von Nitril, Xanthat, Dithiophosphat, Thioncarbamat, Thiocarbamat, Mercaptobenzylthiazol, Monothiophosphat und Dithiophosphinaten und Hydroximatsammlern oder einem Schäumer ausgewählt aus der Gruppe von Phenolen, Alkylsulfaten, aliphatischen Alkoholen wie cyclischen C5-C8-Alkoholen, Alkoxyalkanen, Polypropylenglycolethern, Polyglycolethern, Polyglycolglycerinethern, Pyridinbase, natürlichen Ölen wie beispielsweise Terpineol und Cresolen, gemischten Ethern, Aldehyden und Ketonnebenprodukten aus der Oxoalkoholherstellung, ethoxylierten Alkoholen.

11. Sammlerzusammensetzung nach Anspruch 10 enthaltend 20 bis 80 Gew.-% einer Komponente (a) und 20 bis 80 Gew.-% einer Komponente (b).

12. Sammlerzusammensetzung nach Anspruch 10 oder 11, wobei R' = O oder N-R" und die Summe von m, j und x 0-5 beträgt.

13. Sammlerzusammensetzung nach einem der Ansprüche 10 bis 12, wobei die nitrilhaltige Verbindung die Formel R(R")_{y}-N-(CₙH₂ₙCN)_{z} aufweist, wobei R eine gesättigte oder ungesättigte, lineare oder verzweigte Kohlenwasserstoffgruppe ist, die 8 bis 26 Kohlenstoffatome enthält, R" eine gesättigte oder ungesättigte, lineare oder verzweigte Kohlenwasserstoffgruppe, die 1 bis 26 Kohlenstoffatome enthält, oder ein Wasserstoffatom ist, z 1 oder 2 beträgt, y 0 oder 1 beträgt, die Summe von z + y = 2 oder 3 ist und n eine ganze Zahl zwischen 1 und 5 ist.

14. Breiige Masse umfassend das zerstoßene und gemahlene Kupfer- oder sulfidische Erz und eine Sammlerzusammensetzung umfassend eine nitrilgruppehaltige zwei Verbindung der Formel (I) 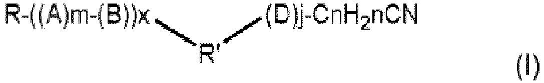 wobei R eine gesättigte oder ungesättigte, lineare oder verzweigte Kohlenwasserstoffgruppe ist, die 8 bis 26 Kohlenstoffatome enthält R' = O oder 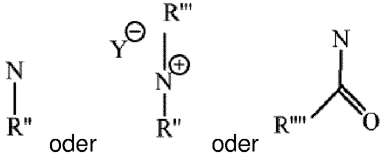
R" eine gesättigte oder ungesättigte, lineare oder verzweigte Kohlenwasserstoffgruppe, die 1 bis 26 Kohlenstoffatome enthält, oder ein Wasserstoffatom oder eine (-(D)ⱼ-CₙH₂ₙCN)-Gruppe oder R-((A)ₘ-B))ₓ-Gruppe ist,
A (-O-CH₂CH₂-); (-O-CH(CH₃)CH₂-) oder (-O-CH(CH₂CH₃)CH₂-) ist;
B (-O-C_{P}H_{2P}-) ist
D (-CH₂CH₂-O);(-CH(CH₃)CH₂-O) oder (-CH(CH₂CH₃)CH₂-O-) ist x 0 oder 1 beträgt
R'" eine Kohlenwasserstoffgruppe ist, die 1 bis 4 Kohlenstoffatome enthält, Y Halogenid oder Methylsulfat ist
m und j jedes unabhängig eine ganze Zahl von 0-5 ist
R"" eine gesättigte oder ungesättigte, lineare oder verzweigte Kohlenwasserstoffgruppe ist, die 1 bis 26 Kohlenstoffatome enthält n und p jedes unabhängig eine ganze Zahl von 1 bis 5 ist.

## Revendications

1. Procédé de traitement de minerais métalliques ou minéraux avec une composition collectrice qui comprend un composé contenant un groupe nitrile de formule (I) 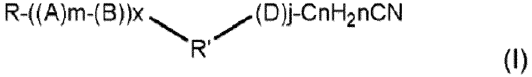 dans laquelle R représente un groupe hydrocarboné linéaire ou ramifié, saturé ou insaturé contenant de 8 à 26 atomes de carbone, R' = O ou 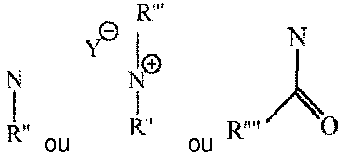
R" représente un groupe hydrocarboné linéaire ou ramifié, saturé ou insaturé contenant de 1 à 26 atomes de carbone ou un atome d'hydrogène ou un groupe (-(D)ⱼ-CₙH₂ₙCN) ou un groupe R-((A)ₘ-(B))ₓ,
A représente (-O-CH₂CH₂-) ; (-O-CH(CH₃)CH₂-) ou (-O-CH(CH₂CH₃)CH₂-) B représente (-O-CₚH₂ₚ-)
D représente (-CH₂CH₂-O-) ; (-CH(CH₃)CH₂-O-) ou (-CH(CH₂CH₃)CH₂-O-) x représente 0 ou 1
R'" représente un groupe hydrocarboné contenant de 1 à 4 atomes de carbone Y représente un halogénure ou un sulfate de méthyle
m et j sont chacun indépendamment un nombre entier de 0 à 5 R"" représente un groupe hydrocarboné linéaire ou ramifié, saturé ou insaturé contenant de 1 à 26 atomes de carbone
n et p sont chacun indépendamment un nombre entier de 1 à 5.

2. Procédé selon la revendication 1 dans lequel R' = O ou N-R", et la somme de m, j et x est comprise entre 0 et 10.

3. Procédé selon la revendication 1 ou 2 dans lequel la somme de m, j et x est comprise entre 0 et 5.

4. Procédé selon l'une quelconque des revendications 1 à 3 dans lequel le composé contenant un groupe nitrile répond à la formule R(R")_{y}-N-(CₙH₂ₙCN)_{z}, dans laquelle R représente un groupe hydrocarboné linéaire ou ramifié, saturé ou insaturé contenant de 8 à 26 atomes de carbone, R" représente un groupe hydrocarboné linéaire ou ramifié, saturé ou insaturé contenant de 1 à 26 atomes de carbone ou un atome d'hydrogène, z représente 1 ou 2, y représente 0 ou 1, la somme de z + y = 2 ou 3 et n est un nombre entier de 1 à 5.

5. Procédé selon l'une quelconque des revendications 1 à 4 dans lequel R et R" représentent chacun indépendamment un groupe alkyle ou un groupe alcényle ayant de 1 à 3 liaisons insaturées.

6. Procédé selon l'une quelconque des revendications 1 à 5 dans lequel R et R" représentent chacun indépendamment un groupe alkyle ou alcényle linéaire, de préférence contenant de 10 à 20 atomes de carbone.

7. Procédé selon l'une quelconque des revendications 1 à 6 dans lequel le minerai métallique ou minéral est un minerai de sulfure métallique contenant du cuivre, de l'or, du platine, de l'argent, du nickel, du molybdène, des sulfures d'arsenic, du cobalt, du zinc, du plomb, de l'étain, de l'antimoine, du cuivre, de l'or, du platine ou de l'argent.

8. Procédé selon l'une quelconque des revendications 1 à 7 dans lequel la composition collectrice contient en outre au moins un collecteur sélectionné dans le groupe du nitrile, du xanthate, du dithiophosphate, du thionocarbamate, du thiocarbamate, du mercaptobenzylthiazole, du monothiophosphate et des dithiophosphinates et des collecteurs d'hydroximate, ou un agent moussant sélectionné dans le groupe des phénols, des sulfates d'alkyle, des alcools aliphatiques, tels que les alcools cycliques en C5 à C8, des alcoxyalcanes, des éthers de polypropylène glycol, des éthers de polyglycol, des éthers de polyglycol glycérol, d'une base de pyridine, des huiles naturelles, telles que le terpinéol et les crésols, des éthers mixtes, des aldéhydes et des co-produits cétoniques de la production d'oxoalcools, des alcools éthoxylés.

9. Procédé selon l'une quelconque des revendications 1 à 8 comprenant les étapes de
a) conditionnement d'une pâte de minerai métallique ou minéral, dans une solution aqueuse
éventuellement, concentration du milieu avec une séparation magnétique ;
- éventuellement, ajout d'agents moussants ;
- éventuellement, conditionnement du mélange avec un dépresseur de flottation ou un activateur de flottation ;
- éventuellement, ajustement du pH
b) ajout de la composition collectrice telle que décrite dans l'une quelconque des revendications 1 à 8
c) éventuellement, ajout d'autres adjuvants de flottation à la pâte, et
d) réalisation d'un procédé de flottation par moussage en introduisant de l'air dans le mélange aqueux de minerai conditionné, et élimination par écumage de la mousse formée pour récupérés le minéral et/ou les métaux.

10. Composition collectrice contenant en tant que composant (a) de 1 % en poids à 99 % en poids d'un composé contenant un groupe nitrile de formule (I) 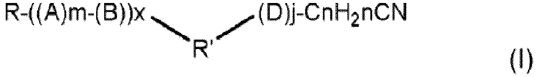 dans laquelle R représente un groupe hydrocarboné linéaire ou ramifié, saturé ou insaturé contenant de 8 à 26 atomes de carbone, R' = O ou 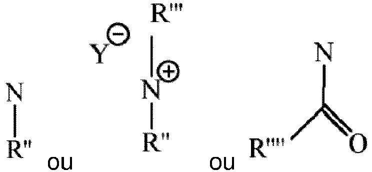
R" représente un groupe hydrocarboné linéaire ou ramifié, saturé ou insaturé contenant de 1 à 26 atomes de carbone ou un atome d'hydrogène ou un groupe (-(D)ⱼ-CₙH₂ₙCN) ou un groupe R-((A)ₘ-(B))ₓ,
A représente (-O-CH₂CH₂-) ; (-O-CH(CH₃)CH₂-) ou (-O-CH(CH₂CH₃)CH₂-) B représente (-O-CₚH₂ₚ-)
D représente (-CH₂CH₂-O-) ; (-CH(CH₃)CH₂-O-) ou (-CH(CH₂CH₃)CH₂-O-) x représente 0 ou 1
R'" représente un groupe hydrocarboné contenant de 1 à 4 atomes de carbone Y représente un halogénure ou un sulfate de méthyle
m et j sont chacun indépendamment un nombre entier de 0 à 5 R"" représente un groupe hydrocarboné linéaire ou ramifié, saturé ou insaturé contenant de 1 à 26 atomes de carbone
n et p sont chacun indépendamment un nombre entier de 1 à 5 ; et
en tant que composé (b) de 1 à 99 % en poids d'au moins un collecteur sélectionné dans le groupe du nitrile, du xanthate, du dithiophosphate, du thionocarbamate, du thiocarbamate, du mercaptobenzylthiazole, du monothiophosphate et des dithiophosphinates et des collecteurs d'hydroximate, ou un agent moussant sélectionné dans le groupe des phénols, des sulfates d'alkyle, des alcools aliphatiques, tels que les alcools cycliques en C5 à C8, des alcoxyalcanes, des éthers de polypropylène glycol, des éthers de polyglycol, des éthers de polyglycol glycérol, d'une base de pyridine, des huiles naturelles, telles que le terpinéol et les crésols, des éthers mixtes, des aldéhydes et des co-produits cétoniques de la production d'oxoalcools, des alcools éthoxylés.

11. Composition collectrice selon la revendication 10 contenant de 20 à 80 % en poids de composant (a) et de 20 à 80 % en poids de composant (b).

12. Composition collectrice selon la revendication 10 ou 11 dans laquelle R' = O ou N-R", et la somme de m, j et x est comprise entre 0 et 5.

13. Composition collectrice selon l'une quelconque des revendications 10 à 12 dans laquelle le composé contenant un groupe nitrile répond à la formule R(R")_{y}-N-(CₙH₂ₙCN)_{z}, dans laquelle R représente un groupe hydrocarboné linéaire ou ramifié, saturé ou insaturé contenant de 8 à 26 atomes de carbone, R" représente un groupe hydrocarboné linéaire ou ramifié, saturé ou insaturé contenant de 1 à 26 atomes de carbone ou un atome d'hydrogène, z représente 1 ou 2, y représente 0 ou 1, la somme de z + y = 2 ou 3 et n est un nombre entier compris entre 1 et 5.

14. Pâte comprenant le minerai de cuivre ou sulfidique concassé et moulu et une composition collectrice comprenant un composé contenant un groupe nitrile de formule (I) 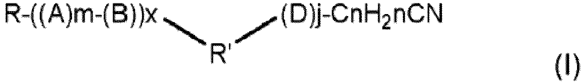 dans laquelle R représente un groupe hydrocarboné linéaire ou ramifié, saturé ou insaturé contenant de 8 à 26 atomes de carbone, R'= O ou 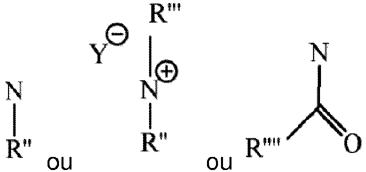
R" représente un groupe hydrocarboné linéaire ou ramifié, saturé ou insaturé contenant de 1 à 26 atomes de carbone ou un atome d'hydrogène ou un groupe (-(D)ⱼ-CₙH₂ₙCN) ou un groupe R-((A)ₘ-(B))ₓ,
A représente (-O-CH₂CH₂-) ; (-O-CH(CH₃)CH₂-) ou (-O-CH(CH₂CH₃)CH₂-) B représente (-O-CₚH₂ₚ-)
D représente (-CH₂CH₂-O-) ; (-CH(CH₃)CH₂-O-) ou (-CH(CH₂CH₃)CH₂-O-) x représente 0 ou 1
R'" représente un groupe hydrocarboné contenant de 1 à 4 atomes de carbone Y représente un halogénure ou un sulfate de méthyle
m, j sont chacun indépendamment un nombre entier de 0 à 5 R"" représente un groupe hydrocarboné linéaire ou ramifié, saturé ou insaturé contenant de 1 à 26 atomes de carbone
n et p sont chacun indépendamment un nombre entier de 1 à 5.
